(19) **Europäisches Patentamt / European Patent Office / Office européen des brevets**

(11) **EP 1 364 982 B1**

(12) # EUROPÄISCHE PATENTSCHRIFT

(45) Veröffentlichungstag und Bekanntmachung des Hinweises auf die Patenterteilung:
**15.08.2007 Patentblatt 2007/33**

(51) Int Cl.:
*C08J 3/22* (2006.01)　　*C08K 3/36* (2006.01)
*C08K 13/02* (2006.01)

(21) Anmeldenummer: **03009818.0**

(22) Anmeldetag: **12.05.2003**

(54) **Verfahren zur Herstellung eines Siliziumverbindungen enthaltenden Polyethylenterephthalat-Rohstoffs und seine Verwendung**

Process for the preparation of a polyethylene terephthalate raw material containing silicium compounds and its use

Procédé pour la préparation de matières premières de téréphthalate de polyéthylène contenant des composés de silice et leur utilisation

(84) Benannte Vertragsstaaten:
**DE FR GB LU**

(30) Priorität: **21.05.2002 DE 10222357**

(43) Veröffentlichungstag der Anmeldung:
**26.11.2003 Patentblatt 2003/48**

(73) Patentinhaber: **Mitsubishi Polyester Film GmbH**
**65203 Wiesbaden (DE)**

(72) Erfinder:
 • **Kliesch, Holger, Dr.**
 **55252 Mainz (DE)**
 • **Kuhmann, Bodo**
 **65594 Runkel (DE)**
 • **Murschall, Ursula, Dr.**
 **55283 Nierstein (DE)**
 • **Kurz, Rainer, Dr.**
 **65307 Bad Schwalbach (DE)**
 • **Kern, Ulrich, Dr.**
 **55218 Ingelheim (DE)**

(74) Vertreter: **Schweitzer, Klaus et al**
**Zounek Plate Schweitzer**
**Patentanwaltskanzlei**
**Rheingaustrasse 196**
**65203 Wiesbaden (DE)**

(56) Entgegenhaltungen:
**WO-A-01/53407 GB-A- 1 417 671**
**US-B1- 6 174 655**

**Beschreibung**

Die Erfindung betrifft ein Siliziumverbindungen enthaltendes Polyethylenterephthalat bzw. Masterbatch, Verfahren zu seiner Herstellung sowie unter Verwendung von dem Polyethylenterephtalat hergestellte Folien, deren Dicke im Bereich von 0,5 bis 1000 $\mu$m liegt. Das Polyethylenterephthalat bzw. Masterbatch enthält zusätzlich mindestens einen Radikalfänger. Die Erfindung betrifft ferner ein Verfahren zur Herstellung der Folie.

Siliziumdioxidpartikel und verwandte Stoffe wie Aluminiumsilikate (z.B. Kaolin) sind in der industriellen Praxis häufig verwendete Additive in Polyesterfolien, die u.a. zur Erzeugung eines opaken Erscheinungsbildes oder einer Oberflächenrauheit dienen. Sie zeichnen sich im allgemeinen durch ihre gute Einbindung in die Polyestermatrix aus.

Die Einbringung von $SiO_2$-Partikeln und Silikaten in Polyesterrohstoffe bringt jedoch oft eine Reihe von Schwierigkeiten mit sich. Wegen der hohen Agglomerationsneigung der Partikel ist ihr Einsatz in höheren Konzentrationen beschränkt bzw. sogar unmöglich. Angaben bei der Herstellung von Polyesterrohstoffen, die mit diesen Verbindungen beladen sind, beziehen sich im allgemeinen auf einen Gehalt von bis zu 2 Gew.%. Die Herstellung von Extrusionsmasterbatchen, d.h. Zugabe der inerten Partikel zum Polyesterrohstoff vor oder während der Extrusion, ist beim Einsatz von $SiO_2$-Partikeln und Silikaten schwierig bis unmöglich, da die Gleichmäßigkeit den Ansprüchen bei der Folienherstellung nicht genügt. Aus diesem Grund werden die Partikel bei den in der Praxis verwendeten $SiO_2$-haltigen Polyesterrohstoffen schon während der Polykondensation der Polyester in Form von konzentrierten $SiO_2$-haltigen Dispersionen (sog. Polymerisationsmasterbatche) zugegeben, um eine homogene Verteilung in dem sich bildenden Polyesterrohstoff zu erzielen. Aber auch hierbei tritt ein Problem auf. So kommt es durch Wechselwirkungen und Reaktionen zwischen Partikel und Polyester zur Bildung einer "Schein"-Viskosität, die trotz noch unvollständiger Polykondensationsreaktion (d.h. bei niedrigem Molekulargewicht des Polyesters) zu einem schnellen Viskositätsanstieg führt. Die Viskosität des Polymerisationsansatzes im Rührkessel wird zu hoch, d.h. je höher die Beladung mit den inerten Teilchen ist, desto größer wird die Wahrscheinlichkeit eines vorzeitigen ungewollten Viskositätsanstiegs. Zu hoch bedeutet, dass die Reaktionsschmelze so viskos wird, dass sie nicht mehr aus dem Reaktor abgelassen werden kann. Diese Tendenz nimmt von natürlichen Silikaten über pyrogenes $SiO_2$ bis hin zu gefällter Kieselsäure immer weiter zu. Je nach verwendetem Partikeltyp gibt es daher eine maximale noch einsetzbare Konzentration im Polymerisationsmasterbatch. Schwierig sind im allgemeinen Konzentrationen oberhalb von 10.000 ppm.

Neben den Problemen in der Rohstoffherstellung kommt es bei Verwendung von $SiO_2$-haltigen Polyesterrohstoffen in der Folienproduktion im verstärkten Umfang zur Bildung von unerwünschten Düsenstreifen und großflächigen Auspülungen von Material erhöhter Viskosität (Fließstörungen).

In der koreanischen Offenlegungsschrift KR 2001 - 47779 wird ein inerte Partikel enthaltender Polyesterfilm beschrieben, der sich als Elektroisoliermaterial eignet. Bei der Herstellung des Polyesterrohstoffes wird neben den inerten Teilchen ein radikalentfernendes Agens (Radikalfänger) sowie ein Reduktionsmittel eingesetzt. Die vernetzungsreduzierende Wirkung solcher Radikalfänger in Polyesterwerkstoffen ist bekannt. Da Polyesterrohstoffe, die zum überwiegenden Teil, d.h. mehr als 90 %, aus PET oder PEN bestehen, aber unter üblichen Verarbeitungsbedingungen nur im sehr geringen Umfang zu Nebenreaktionen neigen, die durch solche Radikalfänger unterdrückt werden können, werden Polyesterfolien in der Regel ohne Zugabe solcher Verbindungen hergestellt. Bei Anwendungen, die, wie in dieser Schrift, besonders geringe Oligomerkonzentrationen benötigen, kann die Verwendung jedoch wirtschaftlich sinnvoll sein. In der Schrift wird ferner angeführt, dass es nicht wünschenswert ist, die inerten Partikel in einem Anteil von mehr als 1 % einzusetzen, da sonst nachteilige Effekte auftreten, beispielsweise die Erhöhung des Filterdrucks während der Polymerisation d.h. Viskositätsanstieg, nachteilige Effekte bei der Filmherstellung und Defekte des Films durch den Maschinenpark, hervorgerufen z.B. durch die Erhöhung der Steifigkeit oder eine Änderung der Kristallisationseigenschaften des Films.

Aufgabe der vorliegenden Erfindung ist es, die beschriebenen Nachteile des Standes der Technik zu vermeiden.

Gelöst wird diese Aufgabe durch ein Verfahren zur Herstellung eines Polyethylenterephthalat-Rohstoffs gemäß Patentanspruch 1 und durch ein Verfahren zum Herstellen einer Folie aus dem so hergestellten Polyethylenterephthalat-Rohstoff gemäß Patentanspruch 2.

Der Polyethylenterephthalat-Rohstoff gemäß der Erfindung liegt in Form eines Masterbatches vor, der 100 bis 10.000 ppm des Radikalfängers enthält. Die Erfindung betrifft ferner ein Verfahren zur Herstellung der Folie mit einer Dicke im Bereich von 0,5 bis 1 000 $\mu$m unter Verwendung des Siliziumverbindungen enthaltenden Rohstoffs. Unter Siliziumverbindungen werden Siliziumdioxidpartikel, d.h. $SiO_2$, natürliche Silikate und Aluminiumsilikate verstanden.

Die Masterbatche gemäß der Erfindung zeichnen sich durch eine hohe Beladung an $SiO_2$ ohne Tendenz zum Auftreten einer Scheinviskosität aus. Folien lassen sich unter Verwendung dieser Rohstoffe streifenfrei und ohne Fließstörungen herstellen.

Siliziumdioxidpartikel im Sinne der Erfindung sind natürliche Silikate und Aluminiumsilikate wie Kaolin, pyrogene Siliziumdioxidpartikel wie ®Aerosil (Degussa, Deutschland) oder gefällte Kieselsäuren, z.B. ®Sylobloc (Grace Worms/ Deutschland), ®Sylysia (Fuji Japan), ®Micloid (OCI, Südkorea).

Üblicherweise werden diese Partikel bei der Herstellung des Polyesterrohstoffes im Falle des Umesterungsverfahrens (DMT-Verfahren) nach der Umesterung bzw. direkt vor der Polykondensation als glykolische Dispersion zugegeben. Die Zugabe kann aber auch schon vor der Umesterung erfolgen.

Im Falle des Direktesterverfahrens (TPA-Verfahren) erfolgt die Zugabe bevorzugt zu Beginn der Polykondensation. Eine spätere Zugabe ist jedoch auch möglich.

Die Konzentration von $SiO_2$ im Masterbatch liegt im Bereich von 2 000 bis 500 000 ppm, vorzugsweise von 21 000 bis 100 000 ppm und insbesondere von 30 000 bis 80 000 ppm.

Beispiele für Thermoplaste sind Polykondensate aus Terephthalsäure, Isophthalsäure oder 2,6-Naphthalindicarbonsäure mit Glykolen mit 2 bis 10 Kohlenstoffatomen wie Polyethylenterephthalat, Polybutylenterephthalat, Poly-1,4-cyclohexylen-dimethylenterephthalat, Polyethylen-2,6-naphthalindicarboxylat oder Polyethylennaphthalat/Bibenzoat. Sie werden auch als Polyester bezeichnet.

Bevorzugte Thermoplaste sind Polyethylenterephthalat(PET), Polyethylennaphthalat (PEN) oder Mischungen daraus.

Unter Polyethylenterephthalat oder Polyethylennaphthalat werden Homopolymere, Compounds, Copolymere, Recyklate dieser Polymeren und andere Variationen der Thermoplasten verstanden.

Die Herstellung der Polyester kann sowohl nach dem Umesterungsverfahren, z. B. mit Hilfe von Umesterungskatalysatoren z. B. Zn-, Mg-, Ca-, Mn-, Li- oder Ge-Salzen, wie auch nach dem Direktesterverfahren erfolgen, bei dem verschiedene Polykondensationskatalysatoren, z.B. Sb-, Ge- oder Ti-Verbindungen, verwendet werden. Phosphorverbindungen werden dabei als Komplexierungsmittel für den Umesterungskatalysator nach Abschluss der Umesterung eingesetzt.

Bei Verwendung von Polykondensationskatalysatoren auf Ti-Basis sollte auf Phosphorverbindungen als Komplexierungsmittel komplett verzichtet werden (maximal 5 ppm P). Bei Sb- oder Ge- oder anderen Polykondensationskatalysatoren sollte der Anteil an Phosphorkomponenten so gering wie möglich gehalten werden. Bei der TPA-Route sind daher Konzentrationen unterhalb von 10 ppm anzustreben, bei der DMT-Route kann der Anteil aber bis zu 100 ppm liegen. Höhere Anteile an Phosphor- Komplexierungsmitteln führen u.a. zu unerwünschten partikelförmigen Nebenprodukten.

Die Polyester können bis zu 50 Mol-%, insbesondere bis zu 30 Mol-%, aus Comonomereinheiten aufgebaut sein, wobei eine Variation in der Glykol- und/oder der Säurekomponente möglich ist. Als Säurekomponente können die Copolyester u. a. 4,4'-Dibenzoesäure, Adipinsäure, Glutarsäure, Azelainsäure, Bernsteinsäure, Sebazinsäure, Phtalsäure, Isophthalsäure, 5-Na-sulfoisophthalsäure oder polyfunktionelle Säuren wie Trimelithsäure und andere enthalten.

Erfindungswesentlich ist, dass in diese Polyesterrohstoffe Stabilisatoren/Radikalfänger in einer Menge von 100 ppm bis 10 000 ppm, vorzugsweise 150 ppm bis 9 000 ppm, insbesondere 200 ppm bis 8 000 ppm zugegeben werden.

Der SV-Wert der Polyester liegt im allgemeinen im Bereich von 500 bis 1 100.

Die dem Polyesterrohstoff zugegebenen Stabilisatoren werden beliebig ausgewählt aus der Gruppe der primären Stabilisatoren, z.B. Phenole oder sekundäre aromatische Amine, oder der Gruppe der sekundären Stabilisatoren wie Thioether, Phosphite und Phosphonite sowie Zink-dibuthyl-dithiocarbamat, oder synergistische Mischungen aus diesen Verbindungen.

Bevorzugt sind die phenolischen Stabilisatoren. Dazu zählen insbesondere sterisch gehinderte Phenole, Thiobisphenole, Alkyliden-bisphenole, Alkyl-phenole, Hydroxybenzyl-Verbindungen, Acyl-amino-phenole und Hydroxyphenylpropionate oder Mischungen daraus (entsprechende Verbindungen sind beispielsweise beschrieben in "Kunststoffadditive", 2. Ausgabe, Gächter Müller, Carl Hanser-Verlag und in "Plastics Additives Handbook", 5. Ausgabe, Dr. Hans Zweifel, Carl Hanser-Verlag).

Üblicherweise werden diese Stabilisatoren im Falle des DMT-Verfahrens nach der Umesterung bzw. direkt vor der Polykondensation, oder auch während der Polykondensation als glykolische Lösung bzw. Dispersion zugegeben.

Völlig überraschend ist es jedoch, dass der Einsatz der beschriebenen Stabilisatoren höhere Beladungen von Siliziumdioxidpartikeln im Polyester möglich macht.

Bei der Herstellung des Rohstoffs (Masterbatch) erfolgt die Herstellung der Polyester beispielsweise nach dem Umesterungsverfahren (DMT-Route). Hierbei wird in der ersten Stufe die Umesterung von Dimethylterephthalsäure mit Ethylenglykol vorgenommen. Unter Verwendung eines Überschusses an Ethylenglykol und Zugabe eines Umesterungskatalysators entsteht bei Temperaturen zwischen 230 und 250 °C nach Ethylenglykolabtrieb Diglykoltherephthalat, das sich dabei bildende Methanol wird ebenfalls abdestilliert. Nach der Umesterung wird eine Phosphorverbindung als Komplexierungsmittel für den Umesterungskatalysator zudosiert. In der zweiten Stufe erfolgt die Polykondensation (Temperaturen zwischen 230 und 300 °C) unter Verwendung eines Polykondensationskatalysators. Der Radikalfänger und die $SiO_2$-Partikel werden separat in Ethylenglykol dispergiert, gegebenenfalls filtriert und nacheinander dem Ansatz zugegeben, wobei die Zusätze auch gemeinsam dispergiert und zugesetzt werden können. Die Zugabe kann sowohl vor oder während der Umesterung als auch zu Beginn oder während der Polykondensation erfolgen. Nach Ethylenglykolabtrieb und Erreichen der gewünschten Endviskosität wird die Reaktionsschmelze aus dem Polykondensationskessel in bekannter Weise granuliert. Das derart erhaltene Masterbatch wird dann für die Weiterverarbeitung eingesetzt.

Der Rohstoff gemäß der Erfindung wird zur Herstellung von mit Siliziumdioxid-beladenen Folien verwendet, deren Herstellungsverfahren sicherer und einfacher verläuft als nach dem Stand der Technik. So lassen sich diese Folien beispielsweise streifenfrei und unter Vermeidung von Fließstörungen erzeugen.

Neben $SiO_2$-haltigen Partikeln kann der Rohstoff und die Folie weitere Additive z.B. in Form von anderen Pigmenten (z.B. $CaCO_3$, $TiO_2$) oder Farbadditiven, Hydrolysestabilisatoren, Flammschutzmitteln, UV-Stabilisatoren, optischen Aufhellern und Antistatika enthalten.

Die Folie gemäß der Erfindung ist ein- oder mehrschichtig, wobei das Masterbatch bei der Herstellung einer oder mehrerer dieser Schichten eingesetzt worden sein kann.

Zur Herstellung der Folie kann der Rohstoff gemäß der Erfindung (eventuell gemischt mit den übrigen Komponenten) in handelsüblichen Industrietrocknern wie Vakuum- (d. h. unter vermindertem Druck), Wirbelschicht-, Fließbett- oder Festbett-(Schacht-)trocknern getrocknet werden. Die genannten Trockner arbeiten im allgemeinen bei normalem Druck mit Temperaturen zwischen 100 und 170 °C. Bei einem Vakuumtrockner, der die schonendsten Trockenbedingungen erlaubt, durchläuft der Rohstoff einen Temperaturbereich von ca. 30 °C bis 150 °C bei einem verminderten Druck von 50 mbar. Eventuell kann noch ein Nachtrockner (Hopper) benutzt werden.

Die Folie gemäß der Erfindung wird im allgemeinen nach an sich bekannten Extrusionsverfahren hergestellt.

Im Rahmen eines dieser Verfahren wird so vorgegangen, dass die entsprechenden Schmelzen durch eine Flachdüse extrudiert werden, die so erhaltene Folie zur Verfestigung auf einer oder mehreren Walze/n (Kühlwalze) als weitgehend amorphe Vorfolie abgezogen und abgeschreckt wird.

Die Spaltweite der Düse ist dabei von entscheidender Bedeutung für das Dickenprofil. Im allgemeinen gilt: je niedriger die Spaltweite desto besser das Profil. Bei Verwendung von $SiO_2$-haltigen Rohstoffen müssen jedoch im allgemeinen nach dem Stand der Technik größere Spaltweiten eingestellt werden, als dies für das Profil wünschenswert wäre, da es sonst vermehrt zu Düsenstreifen und Ausspülungen aus der Düse kommt. Bei Verwendung der Rohstoffe gemäß der Erfindung können je nach Zieldicke und an die Extrusion anschließendem Verfahren überraschenderweise 2 - 25 % geringere Spaltweiten eingestellt werden als bei Verwendung von vergleichbaren Konzentrationen an $SiO_2$ in konventionellen Rohstoffen, ohne dass es zum Auftreten der genannten Probleme kommt. Überraschend dabei ist auch, dass der Gehalt des Radikalfängers im Masterbatch ausreicht, um alle Komponenten der Folie zu stabilisieren, so dass die Bildung von Streifen und Gelteilchen vermieden wird.

Bei einem bevorzugten Verfahren gemäß der Erfindung wird die amorphe Folie anschließend erneut erhitzt und biaxial gestreckt (orientiert) und die biaxial gestreckte Folie thermofixiert.

Die biaxiale Verstreckung wird im allgemeinen sequentiell durchgeführt. Dabei wird vorzugsweise erst in Längsrichtung (d. h. in Maschinenrichtung = MD-Richtung) und anschließend in Querrichtung (d. h. senkrecht zur Maschinenrichtung = TD-Richtung) verstreckt. Dies führt zu einer Orientierung der Molekülketten. Das Verstrecken in Längsrichtung lässt sich mit Hilfe zweier entsprechend dem angestrebten Streckverhältnis verschieden schnell laufenden Walzen durchführen. Zum Querverstrecken benutzt man allgemein einen entsprechenden Kluppenrahmen.

Die Temperatur, bei der die Verstreckung durchgeführt wird, kann in einem relativ großen Bereich variieren und richtet sich nach den gewünschten Eigenschaften der Folie. Im allgemeinen wird die Längs- und auch die Querstreckung bei TG + 10 °C bis TG + 60 °C (TG = Glastemperatur der Folie) durchgeführt. Das Längsstreckverhältnis liegt allgemein im Bereich von 2,0 : 1 bis 6,0 : 1, vorzugsweise von 3,0 : 1 bis 4,5 : 1. Das Querstreckverhältnis liegt allgemein im Bereich von 2,0 : 1 bis 5,0 : 1, vorzugsweise von 3,0 : 1 bis 4,5 : 1 und das der gegebenenfalls. durchgeführten zweiten Längs- und Querstreckung liegt bei 1,1 : 1 bis 5,0 : 1.

Die erste Längsstreckung kann gegebenenfalls gleichzeitig mit der Querstreckung (Simultanstreckung) durchgeführt werden. Als besonders günstig hat es sich erwiesen, wenn das Streckverhältnis in Längs- und Querrichtung jeweils größer als 3,5 ist.

Bei der nachfolgenden Thermofixierung wird die Folie etwa 0,1 bis 10 s lang bei einer Temperatur von 160°C bis 260 °C, vorzugsweise 200 bis 245 °C gehalten. Anschließend an beziehungsweise beginnend in der Thermofixierung wird die Folie um 0 bis 15 %, vorzugsweise um 1,5 bis 8 % in Quer- und gegebenenfalls auch in Längsrichtung relaxiert und die Folie in üblicher Weise abgekühlt und aufgewickelt.

Messmethode

Standardviskosität (SV) und intrinsische Viskosität (IV) Die Standardviskosität SV (DCE) wird, angelehnt an DIN 53726, bei 25 °C in Dichloressigsäure gemessen. Die intrinsische Viskosität (IV) berechnet sich wie folgt aus der Standardviskosität:

$$IV = [\eta] = 6{,}907 \cdot 10^{-4} \, SV \, (DCE) + 0{,}063096 \, [dl/g]$$

Beispiele

Bei nachstehenden Beispielen und den Vergleichsbeispielen handelt es sich jeweils um Folien unterschiedlicher Dicke, die nach einem bekannten Extrusionsverfahren hergestellt wurden.

Rohstoffherstellung

Die Herstellung der Polyester erfolgte nach dem Umesterungsverfahren (DMT-Route). In der ersten Stufe erfolgte die Umesterung von DMT mit Ethylenglykol. Unter Verwendung eines Überschusses an Ethylenglykol und Zugabe von Manganacetat (60 ppm Mn) als Umesterungskatalysator entsteht bei Temperaturen zwischen 230 und 250 °C nach Ethylenglykolabtrieb Diglykoltherephthalat, das sich dabei bildende Methanol wird ebenfalls abdestilliert. Nach der Umesterung wurde $H_3PO_3$ (20 ppm P) als Komplexierungsmittel für den Umesterungskatalysator zudosiert. Der Radikalfänger und die $SiO_2$-Partikel - letztere mit einer Partikelkonzentration von 15 Gew% in der Dispersion - wurden separat in Ethylenglykol dispergiert und nacheinander etwa 10 min nach dem Umesterungskatalysator dem Ansatz zugegeben. Die $SiO_2$-Partikel enthaltende Dispersion wurde vorher über einen 5 $\mu$m-Filter filtriert. In der zweiten Stufe erfolgte die Polykondensation (Temperaturen zwischen 230 und 300 °C) unter Verwendung von 200 ppm Sb aus $Sb_2O_3$ als Katalysator. Nach Ethylenglykolabtrieb und Erreichen der gewünschten Endviskosität wurde die Reaktionsschmelze aus dem Polykondensationskessel in Strangform in ein Wasserbad abgelassen und anschließend granuliert.

Folienherstellung

Chips der vorgenannten Masterbatch-Formulierungen und eines PET-Klarrohstoffs wurden gemäß den in den Beispielen angegebenen Verhältnissen gemischt und in einem Wirbelschichttrockner bei 155 °C für 1 Minute vorkristallisiert, anschließend für 3 Stunden in einem Schachttrockner bei 150 °C getrocknet und bei 290 °C extrudiert. Das geschmolzene Polymer wurde aus einer Düse über eine Abzugswalze abgezogen. Der Film wurde um den Faktor 3,8 in Maschinenrichtung bei 116 °C gestreckt und in einem Rahmen bei 110 °C eine Querstreckung um den Faktor 3,7 durchgeführt. Anschließend wurde die Folie bei 210 °C thermofixiert und in Querrichtung um 4 % bei Temperaturen von 200 -180 °C relaxiert. Die Produktionsgeschwindigkeit (Endfoliengeschwindigkeit) beträgt 280 m/min.

Masterbatch MB1    3,0 Gew.-% Sylysia 320, 3,0 % Gew.-% Aerosil TT600 und 94,0 Gew.-% PET, SV-Wert 800

Masterbatch MB2    3,0 Gew.-% Sylysia 320, 3,0 % Gew.-% Aerosil TT600, 0,1 Gew.-% ®Irganox 1010 und 93,9 Gew.-% PET, SV-Wert 800

Masterbatch MB3    5,0 Gew.-% Sylobloc 44H, und 95,0 Gew.-% PET, SV-Wert 800

Masterbatch MB4    5,0 Gew.-% Sylobloc 44H, 0,2 Gew.-% ®Irganox 1330 und 94,8 Gew.-% PET, SV-Wert 800

Rohstoff R1    100 % PET Klarrohstoff RT49 von Kosa SV 800

Bei der Herstellung von Masterbatch MB1 trat bei 5 Ansätzen zweimal eine so starke Bildung einer Scheinviskosität auf (nach 60% der erwarteten Polykondensationszeit kam es zu einem sprunghaften Anstieg der Viskosität um 15 %), dass die Polykondensation abgebrochen und die Ansätze verworfen werden mussten, bei den übrigen drei Ansätzen von MB1 war zwar der Effekt einer Scheinviskosität auch vorhanden, jedoch ließ sich das Masterbatch, wenn auch nur schwer, aus dem Reaktionskessel entfernen. Bei MB3 war eine Produktion eines zur Folienherstellung geeigneten Rohstoffs nicht möglich. MB2 und MB4 wiesen einen den Erwartungen entsprechenden Verlauf der Viskosität im Polykondensationskessel auf.

Folienproduktion

  Beispiel 1:

  Mischung :10 % MB2 und 90 % R1
  Spaltweite Düse: 3 mm
  Foliendicke: 200 $\mu$m
  Auspülungen und Düsenstreifen nach 48 h Produktion: keine

Beispiel 2:

Mischung :10 % MB2 und 90 % R1
Spaltweite Düse: 2mm
Foliendicke: 5 $\mu$m
Auspülungen und Düsenstreifen nach 48 h Produktion: keine

Beispiel 3:

Mischung :10 % MB4 und 90 % R1
Spaltweite Düse: 2,2 mm
Foliendicke: 12 $\mu$m
Auspülungen und Düsenstreifen nach 48 h Produktion: keine

Vergleichsbeispiel 1:

Mischung :10 % MB1 und 90 % R1
Spaltweite Düse: 3 mm
Foliendicke: 200 $\mu$m
Auspülungen und Düsenstreifen nach 48 h Produktion: Viele Streifen und Auspülungen, Düsenreinigung nötig

Vergleichsbeispiel 2:

Mischung :10 % MB1 und 90 % R1
Spaltweite Düse: 2 mm
Foliendicke: 5 $\mu$m
Auspülungen und Düsenstreifen nach 48 h Produktion: Viele Streifen und Auspülungen, Düsenreinigung nötig

Vergleichsbeispiel 3:

Mischung :10 % MB1 und 90 % R1
Spaltweite Düse: 2,3 mm
Foliendicke: 5 $\mu$m
Auspülungen und Düsenstreifen nach 48 h Produktion: Keine Streifen, vereinzelte Auspülungen, Produktion möglich, aber aufgrund von höherer Spaltweite schlechteres Profil

**Patentansprüche**

1. Verfahren zur Herstellung eines Siliziumoxidpartikel in Form von $SiO_2$, von natürlichen Silikaten oder von Aluminiumsilikaten in Mengen von 2000 bis 500 000 ppm enthaltenden Polyethylenterephthalat-Rohstoffs, der zusätzlich auch noch Radikalfänger in einer Menge von 100 bis 10 000 ppm enthält, **dadurch gekennzeichnet, dass** die Herstellung des Polyethylenterephthalats sowohl nach dem Umesterungsverfahren (DMT-Verfahren) wie auch nach dem Direktesterverfahren (TPA-Verfahren) erfolgt, wobei die Siliziumoxidpartikel und der Radikalfänger im Falle des DMT-Verfahrens vor oder während der Umesterung oder zu Beginn oder während der Polykondensation als glykolische Dispersion zugegeben, im Falle des TPA-Verfahrens zu Beginn der Polykondensation oder später zugegeben werden, wobei die Reaktionsschmelze nach Erreichen der gewünschten Endviskosität aus dem Polykondensationskessel in bekannter Weise granuliert wird.

2. Verfahren zur Herstellung einer Folie mit einer Dicke im Bereich von 0,5 bis 1 000 $\mu$m aus einem nach dem Verfahren von Patentanspruch 1 erhältlichen Polyethylenterephthalat-Rohstoff, **dadurch gekennzeichnet, dass** Chips des Polyethylenterephthalat-Rohstoffs und eines PET-Klarrohstoffs gemischt und extrudiert werden, das geschmolzene Polymer aus einer Düse über eine Abzugswalze abgezogen und der Film gestreckt, thermofixiert und relaxiert wird.

**Claims**

1. A process for producing a silicon dioxide particle in the form of $SiO_2$, naturally occuring silicates, or aluminum silicates, in amounts of from 2000 to 500 000 ppm containing polyethylene terephthalate raw material, which additionally also contains scavengers in an amount from 100 to 10 000 ppm, **characterized in that** the production of the polyethylene terephthalate is carried out both by the transesterfication process (DMT process) and by the direct ester process (TPA process), wherein the silicon dioxide particles and the scavenger in case of the DMT process are added in the form of a glycolic dispersion prior to or during the transesterfication process or at the start of or during the polycondensation process, in the case of the TPA process are added at the beginning of the polycondensation process or later, where the reaction melt is pelletized from the polycondensation reactor in a known manner after the desired final viscosity has been achieved.

2. A process for producing a film with a thickness in the range from 0.5 to 1 000 μm from a polyethylene terephthalate raw material available from the process of claim 1, **characterized in that** chips of the polyethylene terephthalate raw material and of a clear PET raw material are mixed and extruded, drawing off the molten polymer from a die by way of a take-off roll and stretching, heat-setting and relaxing the film.

**Revendications**

1. Procédé de préparation d'une particule d'oxyde de silicium sous forme de SiO$_2$, à partir d'un matériau téréphtalate de polyéthylène contenant des silicates naturels ou des aluminosilicates dans des quantités de 2 000 à 500 000 ppm, qui contient en outre également un antioxydant en une quantité de 100 à 10 000 ppm **caractérisé en ce que** la préparation du téréphtalate de polyéthylène a lieu aussi bien après le procédé de transesterification (procédé DMT) qu'après le procédé d'esterification directe (procédé TPA), où la particule d'oxyde de silicium et l'antioxydant sont ajoutés dans le cas du procédé DMT avant ou pendant la transesterification ou au début ou pendant la polycondensation comme dispersion glycolique, dans le cas du procédé TPA sont ajoutés au début de la polycondensation ou plus tard, où le mélange réactionnel après avoir atteint la viscosité finale souhaitée est granulé d'une manière connue dans le réacteur de polycondensation.

2. Procédé de préparation d'une feuille avec une épaisseur dans la gamme de 0,5 à 1 000 μm à partir d'un matériau téréphtalate de polyéthylène obtenu selon l'un des procédés de la revendication 1, **caractérisé en ce qu'**une plaquette du matériau téréphtalate de polyéthylène et un matériau transparent PET sont mélangés et extrudés, le polymère fondu est extrudé d'une filière d'extrusion sur un rouleau de sortie et le film est étiré, thermofixé et relâché.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- KR 200147779